# EUROPÄISCHE PATENTSCHRIFT

(11) **EP 2 783 076 B1**
(45) Veröffentlichungstag und Bekanntmachung des Hinweises auf die Patenterteilung: **03.08.2016**
(21) Anmeldenummer: 12788425.2
(22) Anmeldetag: 06.11.2012
(51) Int. Cl.: F01D 5/22, F01D 5/28, B23K 1/00, C23C 28/00

(54) **VERFAHREN ZUR PANZERUNG DER Z-NOTCH VON TIAL-SCHAUFELN**
METHOD FOR HARDFACING THE Z-NOTCH OF TIAL BLADES
PROCÉDÉ DE BLINDAGE DE L'ENCOCHE EN Z DE PALES EN TIAL

(30) Priorität: 25.11.2011 DE 102011087158
(43) Veröffentlichungstag der Anmeldung: 01.10.2014
(73) Patentinhaber: MTU Aero Engines AG, 80995 München (DE)
(72) Erfinder: DANIELS, Bernd, 82194 Gröbenzell (DE); HANRIEDER, Herbert, 85411 Hohenkammer (DE); RICHTER, Karl-Hermann, 85229 Markt Indersdorf (DE); STRASSER, Michael, 85253 Erdweg (DE)
(86) Internationale Anmeldenummer: PCT/DE2012/001067
(87) Internationale Veröffentlichungsnummer: WO 2013/075688

(56) Entgegenhaltungen:
- EP-A1- 1 803 521
- EP-A1- 1 881 154
- US-A- 4 818 833

## Beschreibung

### GEBIET DER ERFINDUNG

Die vorliegende Erfindung betrifft ein Verfahren zur Anordnung einer Beschichtung auf einem Bauteil, sowie ein entsprechendes, mit der Beschichtung versehenes Triebwerksbauteil.

### STAND DER TECHNIK

Turbinenschaufeln für Niederdruckturbinen können Deckbänder aufweisen, die benachbart zueinander gegenseitig aneinander anliegen. Die benachbarten Seitenflächen werden üblicherweise Z-förmig ausgebildet und weisen Kontaktbereiche auf, in denen die Deckbänder direkt aneinander anstoßen, um zur Schwingungsdämpfung beizutragen. Diese Kontaktflächen der Deckbänder sind üblicherweise mit einer Panzerung versehen, um den mechanischen Abrieb gering zu halten. Nach dem Stand der Technik werden hierfür Co-Cr-Legierungen, insbesondere sogenannte Stellite (eingetragene Marke der Firma Deloro Stellite), verwendet, die beispielsweise durch WIG-, Mikroplasma- oder Laserstrahlschweißen oder durch sonstige Auftragsschweißverfahren aufgebracht werden. Während für Nickelbasislegierungen bzw. Superlegierungen diese Art der Panzerung gut geeignet ist, ist dies bei Turbinenschaufeln aus Titanaluminiden (TiAl-Legierungen) problematisch, da durch die Durchmischung von TiAl mit Stelliten spröde Phasen entstehen, die zur Rissbildung führen können.

Aus diesem Grunde wurden bei TiAl-Schaufeln für Niederdruckturbinen plasmagespritzte Schichten aus der Co-Cr-Legierung T-800 (eingetragene Marke der Firma Deloro Stellite) eingesetzt. Allerdings erfüllen diese Beschichtungen bzw. Panzerungen unter Umständen nicht die Anforderungen an die Haftungseigenschaften. Entsprechend wurde weiterhin vorgeschlagen (WO 2011/009430) zur Panzerung der Kontaktflächen von Deckbändern von TiAl-Niederdruckturbinenschaufeln (den sogenannten Z-Notches) Formteile aus Stelliten durch Löten aufzubringen. Allerdings ergeben sich hierbei Nachteile dahingehend, dass die Formteile sehr hohen Anforderungen an die Formgenauigkeit genügen müssen, um eine vollflächige und exakte Anlage des Formteils an das zu beschichtenden Bauteil zu gewährleisten. Dadurch werden entsprechende Formteile aus Stelliten relativ teuer.

EP1803521 offenbart ein Verfahren zur Anordnung einer Beschichtung nach dem Oberbegriff des Anspruchs 1.

### OFFENBARUNG DER ERFINDUNG

### AUFGABE DER ERFINDUNG

Es ist deshalb Aufgabe der Erfindung, die Nachteile des Standes der Technik zu vermeiden und eine Panzerung auf einem TiAl-Triebwerksbauteil, insbesondere einer TiAl-Niederdruckturbinenschaufel, zu ermöglichen, wobei die Beschichtung einfach durchführbar sein soll und zuverlässige Ergebnisse hinsichtlich einer gut haftenden Panzerung liefern soll.

### TECHNISCHE LÖSUNG

Diese Aufgabe wird gelöst durch ein Verfahren mit den Merkmalen des Anspruchs 1 und einem Triebwerksbauteil mit den Merkmalen des Anspruchs 13. Vorteilhafte Ausgestaltungen sind Gegenstand der abhängigen Ansprüche.

Die Erfindung schlägt zur Herstellung einer Panzerung an einer Z-Notch von Niederdruckturbinenschaufeln aus TiAl ein neues Verfahren zur Beschichtung vor, bei welchem ein Grünling mit dem zu beschichtenden Werkstoff (Beschichtungswerkstoff) unter Anwesenheit eines Lots auf dem zu beschichtenden Bauteil angeordnet wird und mittels eines kombinierten Löt-Sinter-Prozesses die Beschichtung in Form eines Sinterkörpers geformt und mit dem Bauteil verbunden wird. Durch die Kombination des Lötens und Sinterns in einem Verfahrensschritt ist eine einfache Herstellungsmöglichkeit mit geringem Aufwand gegeben, wobei gleichzeitig sichergestellt wird, dass eine metallurgische Verbindung und vollflächige Anlage der Beschichtung eines zu beschichtenden Bauteils gewährleistet wird.

Dies wird durch die Bereitstellung eines Lots gewährleistet, wobei das Lot bereits im Grünling, also dem zu sinternden Formkörper aus dem Beschichtungswerkstoff, enthalten sein kann. Insbesondere kann das Lot gradiert im Grünling vorliegen, so dass z. B. an der Seite, in der der Grünling an dem zu beschichtenden Bauteil angeordnet wird, der Anteil des Lots hoch ist und mit zunehmendem Abstand vom zu beschichtenden Bauteil abnimmt.

Alternativ oder zusätzlich kann das Lot auch durch einen Schlicker bereitgestellt werden, in dem das Lot mittels eines Binde- und/oder Lösemittels aufgenommen ist. Durch das Binde- und/oder Lösemittel kann der Lotwerkstoff in einfacher Weise durch Aufbringen des fließfähigen Schlickers auf dem zu beschichtenden Bauteil angeordnet werden, beispielsweise mittels Streichen, Spritzen oder dergleichen.

Der Schlicker kann weiterhin ein Klebemittel umfassen, um bei der Anordnung des Grünlings auf dem zu beschichtenden Bauteil mittels des Schlickers eine gute Haftung des Grünlings und/oder des Schlickers auf dem zu beschichtenden Bauteil zu gewährleisen.

In dem Schlicker ist das Lot in Form eines Pulvers oder in Form von Partikeln enthalten, wobei die Partikel sehr feinkörnig gewählt werden können, um sowohl dünne Schlickerschichten als auch vollflächige Anlagen der Beschichtung an das zu beschichtenden Bauteils zu gewährleisten. Entsprechend kann die Partikelgröße des Lots im Schlicker kleiner oder gleich 50 µm, vorzugsweise kleiner oder gleich 25 µm, sein. Hierbei kann die Partikelgröße in Form einer durchschnittlichen Partikelgröße oder in Form einer maximalen Partikelgröße gewählt werden.

Das Binde- und/oder Lösemittel kann ein organisches Binde- und/oder Lösemittel sein, z. B. ein Siebdrucköl, welches eine gleichmäßige und gut haftende Verteilung des Schlickers und somit des Lots auf dem zu beschichtenden Bauteil gewährleistet.

Der Grünling, der den Beschichtungswerkstoff in Form von Partikeln und/oder das Lot, ebenfalls in Form von Partikeln, umfasst, um durch Sintern der Partikel aus dem Beschichtungswerkstoff die Beschichtung bzw. Panzerung zu bilden, kann eine Dicke von 0,2 mm bis 2 mm, vorzugsweise 0,3 mm bis 0,6 mm, aufweisen.

Nach dem Aufbringen des Schlickers auf das zu beschichtende Bauteil und/oder eines Klebstoffs auf dem Grünling sowie Anordnung des Grünlings auf der Schlickerschicht kann in einer ersten Temperaturbehandlung das Binde- und/oder Lösemittel und/oder ein Klebestoff getrocknet werden, wobei das zu beschichtende Bauteil mit dem Schlicker und dem Grünling lokal oder insgesamt auf Temperaturen im Bereich von 60 °C bis 100 °C erhitzt wird. Dadurch erfolgt eine vorläufige Fixierung des Grünlings auf dem zu beschichtenden Bauteil.

Danach kann der kombinierte Löt-Sinter-Prozess mit entsprechend hohen Temperaturen, bei denen das Binde- und/oder Lösemittel verdampft, der Beschichtungswerkstoff im Grünling sintert und das Lot in der ehemaligen Schlickerschicht und/oder im Grünling schmilzt, durchgeführt werden. Die Temperaturbehandlung kann insbesondere durch induktives, lokales Heizen des Beschichtungsbereichs realisiert werden. Nach dem kombinierten Löt-Sinter-Prozess sind die Partikel des Beschichtungswerkstoffs im Grünling zu einem Sinterkörper geformt, der die Beschichtung bzw. Panzerung bildet und das Lot stellt eine gut haftende Verbindung zwischen dem Sinterkörper, den Partikeln und dem zu beschichtenden Bauteil bereit.

Der Löt-Sinter-Prozess kann im Vakuum, insbesondere Hochvakuum, oder unter Schutzgas, beispielsweise in einer Argonatmosphäre, durchgeführt werden.

Als Beschichtungswerkstoff kommen Co-Cr-Legierungen, insbesondere Co-Basis-Legienmgen mit Chromanteil von über 25 Gew.% und W-Anteilen von 4 bis 20 Gew.% oder Co-Cr-Legierungen mit Co-Basis-Legierungen mit einem Cr-Anteil von unter 20 Gew.% und Mo-Anteil von über 20 Gew.% in Frage. Beispiele hierfür sind insbesondere die Legierung T-800 oder die Stellite-Legierungen der Firma Deloro Stellite.

Das Lot für den Schlicker oder/und den Grünling kann ein Nickelbasislot sein, insbesondere ein Lot des SAE Standards AMS4777.

### KURZBESCHREIBUNG DER FIGUREN

Die beigefügten Figuren zeigen in rein schematischer Darstellung in
- Fig. 1: eine Draufsicht auf ein Deckband einer Laufschaufel eines Flugtriebwerks;
- Fig. 2: einen teilweisen Querschnitt durch das Deckband aus Fig. 1 im Panzerungsbereich des Deckbands; und in
- Fig. 3: einen Querschnitt durch das Deckband aus Fig. 1 im Panzerungsbereich des Deckbands in einer anderen Ausführungsform.

### AUSFÜHRUNGSBEISPIEL

Weitere Vorteile, Kennzeichen und Merkmale der vorliegenden Erfindung werden bei der nachfolgenden detaillierten Beschreibung von Ausführungsbeispielen deutlich. Die Erfindung ist jedoch nicht auf diese Ausfuhrungsbeispiele beschränkt.

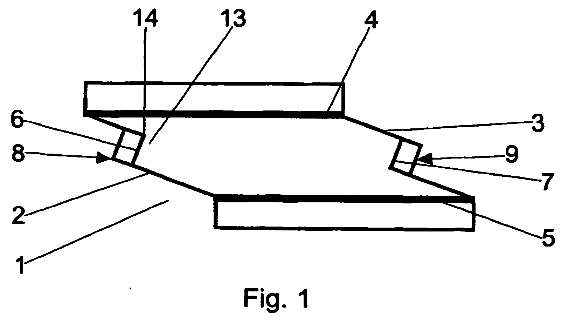

Die Fig. 1 zeigt eine Draufsicht auf ein Deckband 1 einer Laufschaufel, wie sie beispielsweise in einer Niederdruckturbine einer Flugtriebwerks eingesetzt werden kann. Die Laufschaufel und das Deckband 1 bestehen aus einer hochfesten und hochtemperaturbeständigen Titanaluminid-Legierung, also einer Legierung, die im Wesentlichen aus intermetallischen Phasen, wie Ti₃Al oder TiAl gebildet ist und im Allgemeinen hier als TiAl-Legierung bezeichnet wird. Das Deckband hat eine im Wesentlichen plattenartige Gestalt mit zwei voneinander beabstandeten, sich in Rotationsrichtung erstreckenden außen liegenden Dichtlippen bzw. Dichtstegen 4, 5 und zwei Z-förmigen Seitenflächen 2 und 3, die an benachbarten Laufschaufeln bzw. Deckbändern anliegen. Die Z-förmigen Seitenflächen 2, 3 weisen jeweils eine Kontaktfläche 6, 7 zur gegenseitigen Anlage mit benachbarten Laufschaufeln bzw. Deckbändern zur Schwingungsdämpfung auf. Zur Reduzierung des Abriebs an den Kontaktflächen 6, 7 sind diese jeweils mit einer Panzerung 8, 9 versehen.

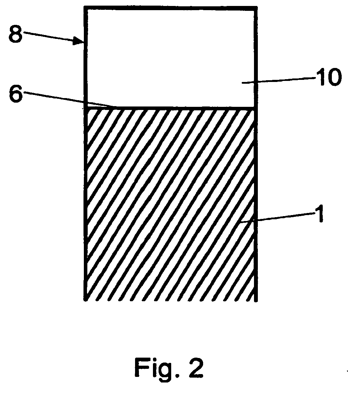

Fig. 2 zeigt einen Querschnitt durch einen Teil des Deckbands 1 im Bereich der Kontaktfläche 6 mit der Panzerung 8. Gemäß der ersten Ausführungsform der Figur 2 ist die Panzerung 8 durch einen aufgelöteten Sinterkörper 10 gebildet, der beispielsweise als Panzerwerkstoff eine Co-Cr-Legierung wie beispielsweise die Legierung Tribaloy T-800 (eingetragene Marke der Firma Deloro Stellite) sowie ein Nickelbasislot nach dem SAES-Standard AMS4777 umfasst.

Zur Herstellung der Beschichtung bzw. Panzerung 8 auf der Kontaktfläche 6 des Deckbandes 1 wird im Bereich der Kontaktfläche 6, wie in Fig. 1 gezeigt ist, eine Tasche 13 im Deckband 1 ausgebildet, in welcher ein Grünling aus dem Beschichtungswerkstoff, also der Co-Cr-Legierung, und dem Lot, also dem Nickelbasislot, angeordnet wird. Der Grünling wird dabei etwas größer als die Tasche ausgebildet, um der Schrumpfung des Grünling beim anschließenden Sintern Rechnung zu tragen. Der Grünling kann exakt in die Tasche 13 des Deckbands 1 eingeformt werden und beispielsweise einen Eckradius 14 der Tasche 13 vollständig und vollflächig belegen, um bei der nachfolgenden kombinierten Lot-Sinter-Behandlung einen vollflächigen und porenfreien Werkstoffverbund zu erzeugen. Alternativ kann auch auf die Ausbildung einer Tasche 13 verzichtet werden und die Beschichtung bzw. Panzerung 8 auf die unvorbereitete Oberfläche des Bauteils aufgebracht werden.

Nach dem Anbringen des Grünlings in der Tasche 13 wird ein kombinierter Löt-Sinter-Prozess durchgeführt, bei welchem das im Grünling enthaltene Lot aufschmilzt und fur eine feste Verbindung der Beschichtungswerkstoffpartikeln mit dem TiAl-Werkstoff des Deckblatts 1 sorgt. Gleichzeitig wird durch die Wärmebehandlung die Co-Cr-Legierung, die in dem Grünling in Partikeln vorliegt, durch Sintern zu einem Sinterkörper verbunden.

Um möglichst viel Lot im Bereich der Verbindungsfläche zwischen dem Grünling und dem zu beschichtenden Bauteil, also dem Deckblatt 1, vorzusehen, kann der Grünling als Gradientenwerkstoff ausgebildet sein, so dass an der Seite des Grünlings, die mit dem Bauteil verbunden werden soll, ein hoher Lotanteil vorhanden ist, während an der gegenüberliegenden Seite der Lotanteil verringert ist. Statt eines kontinuierlichen Übergangs mit einem Gradienten, können auch Lagen ausgebildet sein, z. B. zwei Lagen ("2-lagiges" Lottape). Der Grünling kann auch so ausgebildet sein, dass eine mittlere Lage aus einem Lot-/Beschichtungsstoff-(Hartstoff-)gemisch besteht, die von 2 äußeren Lagen aus reinem Lot eingeschlossen ist ("3-lagiges" Lottape).

Der Grünling, welcher auch als Lottape bezeichnet werden kann, weist üblicherweise eine Dicke von 0,2 bis 2 mm, insbesondere 0,3 mm bis 0,6 mm, auf.

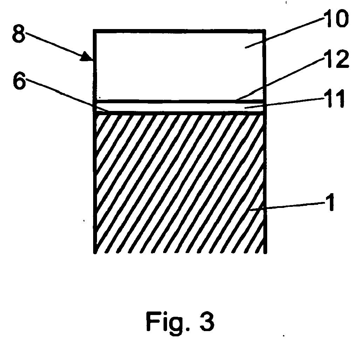

Nach einer weiteren Ausführungsform, die in Fig. 3 dargestellt ist, kann zusätzlich zwischen dem Grünling 10 und dem zu beschichtenden Bauteil 1 eine Lotschicht 11 ausgebildet werden. Die Herstellung erfolgt dabei so, dass der Grünling, der durch die nachfolgende Lot-Sinter-Behandlung in den Sinterkörper 10 umgebildet wird, mittels einer Schlickerschicht auf dem zu beschichtenden Bauteil angeordnet wird. Die Schlickerschicht wird durch einen Schlicker gebildet, der auf dem zu beschichtenden Bauteil in geeigneter Weise aufgebracht wird, beispielsweise durch Streichen, Spritzen oder dergleichen. Der Schlicker umfasst ein Löse- und/oder Bindemittel sowie ein pulverförmiges Lot, das in dem Löse- und/oder Bindemittel aufgenommen ist. Das Löse- und/oder Bindemittel ist z. B. ein Siebdrucköl. Zusätzlich kann der Schlicker einen Klebestoff umfassen, der die Haftung des Schlickers auf dem zu beschichtenden Bauteil und des Grünlings auf dem Bauteil verbessert.
Ferner kann der Grünling 10 mit einem Klebestoff bestrichen werden.

Die Partikel des Lotpulvers können eine Partikelgröße von weniger oder gleich 50 µm, insbesondere weniger oder gleich 25 µm, aufweisen, um durch die feinkörnige Gestaltung wiederum eine vollflächige und porenfreie Anlage des Schlickers bzw. der nachfolgend daraus gebildeten Lotschicht an das zu beschichtende Bauteil zu gewährleisten. Das Lot kann aus demselben Material sein, wie das Lot, das im Grünling verwendet wird.

Auf die Schlickerschicht wird der Grünling aufgesetzt und über die Schlickerschicht in der Tasche 13 gehalten. Anstelle einer Schlickerschicht kann auch eine Lotfolie verwendet werden.

Anschließend wird das Siebdrucköl und ein ggf. vorhandenes Klebemittel bei einer Temperaturbehandlung im Bereich von 60°C bis 500°C verdampft, so dass in der Schlickerschicht lediglich die Lotpartikel verbleiben.

Bei dem nachgeschalteten Löt-Sinter-Prozess wird das Lot der ehemaligen Schlickerschicht aufgeschmolzen und bildet einen festen Werkstoffverbund zwischen dem Grundwerkstoff des Bauteils und der Beschichtung in Form des Grünlings aus, der gleichzeitig zu dem Sinterkörper 10 gesintert wird.

Bei dieser Ausführungsform kann der Grünling nur einen geringen Lotanteil (typischerweise 20%) aufweisen, da das Lot zur Verbindung des Beschichtungswerkstoffs mit dem Bauteil durch die Schlickerschicht bereitgestellt wird. Der Grünling kann in diesem Fall im Wesentlichen aus den Pulverpartikeln des Beschichtungswerkstoffs bestehen, die im kombinierten Löt-Sinter-Prozess zu einem Sinterkörper 10 gesintert werden. Eventuell kann der Grünling ebenfalls ein Bindemittel umfassen.

Der Löt-/Smterprozess wird im Vakuum, insbesondere Hochvakuum, und/oder unter Schutzgas, insbesondere in Argonatmosphäre, durchgeführt. Unter Vakuum bzw. Hochvakuum werden hierbei Zustände verstanden, die nach dem Stand der Technik durch geeignete technische Mittel erreichbar sind, also Zustände mit entsprechenden kleinen Restdrucken.

Der Löt-Sinter-Prozess kann durch induktive Erwärmung des entsprechenden Bauteilbereichs durchgeführt werden.

## Patentansprüche

1. Verfahren zur Anordnung einer Beschichtung (8,9), auf einem Bauteil (1), wobei die Beschichtung einen metallischen Beschichtungswerkstoff umfasst, wobei ein Grünling mit dem Beschichtungswerkstoff gebildet wird, der unter Anwesenheit eines Lots auf dem Bauteil (1) angeordnet wird
**dadurch gekennzeichnet, dass**
mittels eines kombinierten Löt-Sinter-Prozesses der Beschichtungswerkstoff gesintert wird und sich zur Beschichtung (8, 9) formt und mittels des kombinierten Löt-Sinter-Prozesses das Lot (11) aufgeschmolzen wird und dadurch die Beschichtung (8,9) mit dem Bauteil (1) verbunden wird.

2. Verfahren nach Anspruch 1,
**dadurch gekennzeichnet, dass**
das Lot im Grünling enthalten ist.

3. Verfahren nach Anspruch 1 oder 2,
**dadurch gekennzeichnet, dass**
der Grünling mittels eines Schlickers, der ein Binde- und/oder Lösemittel und ein Lot und/oder einer Lotfolie umfasst, auf dem Bauteil (1) angeordnet wird.

4. Verfahren nach Anspruch 3,
**dadurch gekennzeichnet, dass**
der Schlicker das Lot in Form von Partikeln, insbesondere mit einer Partikelgröße kleiner oder gleich 50 µm, oder kleiner oder gleich 25 µm, aufweist und/oder das Binde- und/oder Lösemittel eine organisches Binde- und/oder Lösemittel, insbesondere ein Siebdrucköl ist.

5. Verfahren nach einem der vorhergehenden Ansprüche,
**dadurch gekennzeichnet, dass**
der Grünling weiterhin ein Klebemittel umfasst und/oder mit einem Klebemittel versehen auf dem Bauteil angeordnet wird.

6. Verfahren nach einem der Ansprüche 3 bis 5,
**dadurch gekennzeichnet, dass**
vor dem Löten leicht flüchtige Bestandteile des Schlickers verdampft werden.

7. Verfahren nach einem der vorhergehenden Ansprüche,
**dadurch gekennzeichnet, dass**
der Grünling eine Dicke von 0,2 mm bis 2 mm, oder 0,3 mm bis 0,6 mm aufweist.

8. Verfahren nach einem der vorhergehenden Ansprüche,
**dadurch gekennzeichnet, dass**
der Löt-Sinter-Prozess durch induktives Heizen durchgeführt wird.

9. Verfahren nach einem der vorhergehenden Ansprüche,
**dadurch gekennzeichnet, dass**
der Löt-Sinter-Prozess im Vakuum oder unter Schutzgas durchgeführt wird.

10. Verfahren nach einem der vorhergehenden Ansprüche,
**dadurch gekennzeichnet, dass**
der Beschichtungswerkstoff eine Co-Cr-Legierung, insbesondere Co-Basis-Legierungen mit Cr-Anteilen von über 25 Gew.% und W-Anteilen von 4 bis 20 Gew.% oder mit Cr-Anteilen von unter 20 Gew.% und Mo-Anteilen von über 20 Gew.% aufweist.

11. Verfahren nach einem der vorhergehenden Ansprüche,
**dadurch gekennzeichnet, dass**
das Lot ein Nickelbasislot ist.

12. Verfahren nach einem der vorhergehenden Ansprüche
**dadurch gekennzeichnet, dass**
der Grünling ein 3-lagiges oder mehrlagiges Lottape ist, das in der Zwischenlage ein Lot-/Beschichtungsstoffgemisch und in den äußeren Lagen reinen Lotwerkstoff enthält.

13. Triebwerksbauteil mit einer Beschichtung, die nach einem der vorhergehenden Ansprüche hergestellt ist.

## Claims

1. A method for arranging a coating (8, 9) on a component (1), wherein the coating comprises a metallic coating material, wherein a green compact is formed with the coating material that is arranged on the component (1) in the presence of a solder,
**characterised in that**
by means of a combined soldering-sintering process the coating material is sintered and formed into the coating (8, 9) and by means of the combined soldering-sintering process the solder (11) is melted down and as a result the coating (8, 9) is connected to the component (1).

2. A method according to claim 1,
**characterised in that**
the solder is contained in the green compact.

3. A method according to claim 1 or 2,
**characterised in that**
the green compact is arranged on the component (1) by means of a slurry that comprises a binding agent and/or a solvent and a solder and/or a soldering foil.

4. A method according to claim 3,
**characterised in that**
the slurry has the solder in the form of particles, in particular with a particle size that is smaller than or equal to 50 µm, or smaller than or equal to 25 µm, and/or the binding agent and/or solvent is an organic binding agent and/or solvent, in particular a screen printing oil.

5. A method according to one of the preceding claims,
**characterised in that**
the green compact comprises, furthermore, an adhesive and/or provided with an adhesive is arranged on the component.

6. A method according to one of claims 3 to 5,
**characterised in that**
prior to the soldering, highly volatile constituents of the slurry are vaporized.

7. A method according to one of the preceding claims, **characterised in that**
the green compact has a thickness of 0.2 mm to 2 mm, or 0.3 mm to 0.6 mm.

8. A method according to one of the preceding claims,
**characterised in that**
the soldering-sintering process is carried out by means of inductive heating.

9. A method according to one of the preceding claims,
**characterized in that**
the soldering-sintering process is carried out in a vacuum or under inert gas.

10. A method according to one of the preceding claims,
**characterised in that**
the coating material has a Co-Cr-alloy, in particular Co-based alloys with Cr proportions of over 25 % by weight and W proportions of 4 to 20 % by weight or with Cr proportions of under 20 % by weight and Mo proportions of over 20 % by weight.

11. A method according to one of the preceding claims,
**characterised in that**
the solder is a nickel-based solder.

12. A method according to one of the preceding claims,
**characterised in that**
the green compact is a three-layer or multi-layer soldering tape which in the intermediate layer contains a soldering/coating substance mixture and in the outer layers contains pure soldering material.

13. An engine component having a coating that is produced according to one of the preceding claims.

## Revendications

1. Procédé d'agencement d'un revêtement (B, 9) sur un composant (1), le revêtement comportant un matériau de revêtement métallique, une ébauche crue étant formée avec le matériau de revêtement qui est agencé en présence d'un métal d'apport sur le composant (1),
**caractérisé en ce que**
le matériau de revêtement est fritté à l'aide d'un processus de frittage et de brasage combiné et se forme pour le revêtement (8, 9) et le métal d'apport (11) est fondu à l'aide du processus de frittage et de brasage combiné et le revêtement (8, 9) est relié par là même au composant (1).

2. Procédé selon la revendication 1,
**caractérisé en ce que**
le métal d'apport est contenu dans l'ébauche crue.

3. Procédé selon la revendication 1 ou 2,
**caractérisé en ce que**
l'ébauche crue est agencée à l'aide d'une barbotine qui comporte un liant et/ou un solvant et un métal d'apport et/ou un film de métal d'apport, sur le composant (1).

4. Procédé selon la revendication 3,
**caractérisé en ce que**
la barbotine présente le métal d'apport sous la forme de particules, en particulier avec une grandeur de particules inférieure ou égale à 50 µm ou inférieure ou égale à 25 µm, et/ou le liant et/ou le solvant est un liant et/ou un solvant organique, en particulier une huile de sérigraphie.

5. Procédé selon l'une quelconque des revendications précédentes,
**caractérisé en ce que**
l'ébauche crue comporte en outre un agent adhésif et/ou est agencée pourvue d'un agent adhésif sur le composant.

6. Procédé selon l'une quelconque des revendications 3 à 5,
**caractérisé en ce que**
des éléments légèrement volatils de la barbotine sont évaporés avant le brasage.

7. Procédé selon l'une quelconque des revendications précédentes,
**caractérisé en ce que**
l'ébauche crue présente une épaisseur de 0,2 à 2 mm ou de 0,3 à 0,6 mm.

8. Procédé selon l'une quelconque des revendications précédentes,
**caractérisé en ce que**
le processus de frittage et de brasage est réalisé par chauffage inductif.

9. Procédé selon l'une quelconque des revendications précédentes,
**caractérisé en ce que**
le processus de frittage et de brasage est réalisé dans le vide ou sous gaz protecteur.

10. Procédé selon l'une quelconque des revendications précédentes,
**caractérisé en ce que**
le matériau de revêtement présente un alliage de Co-Cr, en particulier des alliages à base de Co avec des parts de Cr de plus de 25 % en poids et des parts de W de 4 à 20 % en poids ou avec des parts de Cr de moins de 20 % en poids et des parts de Mo de plus de 20 % en poids.

11. Procédé selon l'une quelconque des revendications précédentes,
**caractérisé en ce que**
le métal d'apport est un métal d'apport à base de nickel.

12. Procédé selon l'une quelconque des revendications précédentes,
**caractérisé en ce que**
l'ébauche crue est une bande de métal d'apport à 3 couches ou plusieurs couches qui contient dans la couche intermédiaire un mélange de métal d'apport et de revêtement et dans les couches extérieures du matériau de métal d'apport pur.

13. Composant de turbine avec un revêtement qui est fabriqué selon l'une quelconque des revendications précédentes.
